(19) Europäisches Patentamt / European Patent Office / Office européen des brevets

(11) **EP 2 040 569 B1**

(12) **EUROPEAN PATENT SPECIFICATION**

(45) Date of publication and mention of the grant of the patent:
**28.04.2010 Bulletin 2010/17**

(51) Int Cl.:
*A23L 1/39* (2006.01)   *A23L 1/40* (2006.01)
*A23L 1/054* (2006.01)   *A23L 1/0526* (2006.01)
*A23L 1/221* (2006.01)

(21) Application number: **08717069.2**

(22) Date of filing: **25.02.2008**

(86) International application number:
**PCT/EP2008/052215**

(87) International publication number:
**WO 2008/151850 (18.12.2008 Gazette 2008/51)**

(54) **PACKAGED CONCENTRATE FOR PREPARING A BOUILLON, SOUP, SAUCE, GRAVY OR FOR USE AS A SEASONING, THE CONCENTRATE COMPRISING XANTHAN AND TARA GUM**

ABGEPACKTES KONZENTRAT ZUR ZUBEREITUNG VON BOUILLON, SUPPE, SAUCE, TUNKE ODER ZUR VERWENDUNG ALS WÜRZE SOWIE DAS KONZENTRAT MIT XANTHAN UND TARAKERNMEHL

CONCENTRÉ CONDITIONNÉ POUR LA PRÉPARATION D'UN BOUILLON, D'UNE SOUPE, D'UNE SAUCE OU D'UN JUS, OU À UTILISER COMME ASSAISONNEMENT, CE CONCENTRÉ COMPRENANT DU XANTHANE ET DE LA GOMME DE TARA

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.06.2007 EP 07110027**

(43) Date of publication of application:
**01.04.2009 Bulletin 2009/14**

(73) Proprietors:
• **Unilever N.V.**
**3013 AL Rotterdam (NL)**
Designated Contracting States:
**AT BE BG CH CZ DE DK EE ES FI FR GR HR HU IS IT LI LT LU LV MC NL NO PL PT RO SE SI SK TR**
• **Unilever PLC**
**London**
**Greater London EC4P 4BQ (GB)**
Designated Contracting States:
**CY GB IE MT**

(72) Inventors:
• **ACHTERKAMP, Georg**
**74074 Heilbronn (DE)**
• **ACKERMANN, Dieter, Kurt, Karl**
**74080 Heilbronn (DE)**
• **INOUE, Chiharu**
**NL-3133 AT Vlaardingen (NL)**
• **KUHN, Matthias**
**74074 Heilbronn (DE)**

(74) Representative: **Tjon, Hon Kong Guno**
**Unilever N.V.**
**Unilever Patent Group**
**Olivier van Noortlaan 120**
**3133 AT Vlaardingen (NL)**

(56) References cited:
**WO-A-00/36930      JP-A- 61 031 068**

• **DATABASE WPI Week 198442 Derwent Publications Ltd., London, GB; AN 1984-259203 XP002458961 & JP 59 156270 A (NODA T) 5 September 1984 (1984-09-05)**
• **DATABASE WPI Week 197344 Derwent Publications Ltd., London, GB; AN 1973-67265U XP002458962 & JP 48 035463 B (DAINIPPON PHARM CO LTD) 27 October 1973 (1973-10-27)**
• **DATABASE WPI Week 198308 Derwent Publications Ltd., London, GB; AN 1983-18281K XP002458963 & JP 58 005143 A (SAN-EI CHEM IND LTD) 12 January 1983 (1983-01-12)**

**EP 2 040 569 B1**

## Description

### Field of the invention

The present invention relates to concentrates for preparing a bouillon, broth, soup, sauce, gravy or for use as a seasoning. More in particular, the invention relates to such concentrates in the form of a jelly.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon", or "bouillon concentrates".

Conventionally, bouillon concentrates comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

The most common physical formats in which such concentrates are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid concentrates for bouillons, soups, sauces etcetera do also exist. They have the advantage that e.g. liquid extracts or concentrates of herbs, vegetables, meat etcetera can be included.

There is a desire for concentrates for preparing a bouillon, broth, soup, sauce, gravy, or for use as seasoning, which combine some advantages of liquid concentrates (e.g. allowing the use of ingredients which are not fully dried) with some advantages of dry concentrates (e.g. unit dosing).

JP 61/031,068 discloses soup concentrates for use with instant noodles, which soup concentrate is in the form of a jelly, which concentrate needs to be diluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

### Summary of the invention

There is a need for (alternative) packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 37 g would dissolve in 1000 ml boiling water in less than 4 minutes, preferably less than 3 minutes). It is also preferred that such jelly has a low tendency to syneresis (water separation), preferably no syneresis, and is preferably an elastic, not too rigid gel (as such will facilitate removal from its packaging; elastic and not too rigid can best be judged by hand-feel). Also it is desired that preferably the gel is easy to manufacture (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1:50 (i.e. allows for high salt levels in the gel). Also, the product should be fairly stable in transport and storage, which is normally at ambient temperatures, but during which temperatures can rise substantially higher. Preferably, the gel should also have a certain strength: preferably the strength should be such that the force (in gram) necessary for a plunger to penetrate 10 mm in a gel is above 30.

It has now been found that such may be achieved (at least in part) by a packaged concentrate for preparing a bouillon, broth, soup, sauce, gravy or for use as a seasoning, said concentrate comprising:

- 20-80% water (weight % based on total packaged concentrate),
- 0.8% to 2.5%, preferably 1%-2%, more preferably 1.2-1.8% (weight % based on water content of concentrate) of a gelling agent comprising the combination of xanthan and tara gum, xanthan and tara gum each being present in an amount of 20-80% on the total amount of xanthan + tara gum,
- 15-40% (weight % based on water content of concentrate), more preferably 15-30%, even more preferably 15-26% and most preferably 20-26% of salt,
- 0.5-60% (weight % based on the total packaged concentrate) of taste imparting components.

Water (as amount) is herein to be understood as the total amount of moisture present. The concentration of salt is to be calculated as (amount of salt) / (amount of salt + total moisture). The same is true for other dissolved matter, such as gelling agent (amount gelling agent) / (amount gelling agent + total moisture).

The packaged concentrate of the present invention advantageously has the appearance of a gel (preferably judged when taken out of the packaging). The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way).

**Detailed description of the invention**

In the formulation as set out above, it is preferred that the concentrate comprises 20-30% (weight % based on water content of concentrate) salt, even more preferably the concentrate according to the present invention comprises 20-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable. The upper limit of solubility in water of NaCl is around 26% (at room temperature), and hence above this limit some salt crystals may occur. Hence, the amount of salt is preferably (just) below this salt saturation concentration level.

The concentrates of the present invention can be more or less shape stable: it is not an easily flowable product, but it being a gelled product means it can deform (easily) under pressure. By choosing the amount and ratio of xanthan and tara gum the desired rheology can be obtained. A balance will need to be found between gels which are firm (usually easy to get out of the packaging) by e.g. increasing the amount of xanthan and/or tara gum, and dissolvability.

The amount and ratio of xanthan and tara gum as required will e.g. depend on the amount of salt in the formulation, and such amounts and ratio can be determined by the person of average skill in the art of gelled food products without undue burden. Tara gum and xanthan on their own do not really gel at high salt concentrations, but in combination they do. Typical amounts will be:

-   at a salt level of 15%: xanthan + tara gum (together): 0.5%-2%, more preferably 0.8-1.5% most preferably 1.2-1.8%,
-   at a salt level of 25%: xanthan + tara gum (together): 1%-2.5%, more preferably 1.2%-1.8%, most preferably 1.2%-1.6%,

as wt% on the amount of water as defined above.

The xanthan and tara gum are herein preferably used in such amounts that the total amount of xanthan + tara gum comprises 30-70% tara gum and 30-70% xanthan (wt% on total amount of xanthan+tara gum). Preferably, these amounts are 40-60% and 60-40%, respectively, and even more preferred 45-55% and 55-45%, respectively. Most preferred ratio is each component in an amount of about 50% and 50%.

Besides xanthan and tara gum, the present concentrate may contain one or more additional gelling and/or thickening agents, such as gelatin, cassia gum, guar gum, konjac mannan, modified starch. Advantageously, the combined amount of tara gum and xanthan present in the packaged concentrate amounts to a concentration of 0.8% to 2.5%, more preferably of 1.0% to 2.0% and most preferably of 1.2% to 1.8% (weight % based on water content of concentrate).

In the concentrates according to the invention, it is preferred that the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin. The taste-imparting components may also comprise herbs, vegetables, fruits, meat, fish, crustaceans, or particulates thereof. Due to the wet nature of the concentrates according to the invention, such taste-imparting components can be in a not completely dried state, yet the concentrate still allows unit dosing. Generally speaking such "wet" ingredients will have a higher quality or higher quality image. Also wet ingredients may be included which do not contribute to taste, but which are there for visual reasons. Such can e.g. be pieces of certain vegetables. Such may be present in the same amount as the taste-imparting components. In the above, where it says "meat" this is to be understood to comprise beef, pork, chicken (and other fowl). Preferably the amount of taste-imparting components as set out above is 1-40% (by weight on the total packed concentrate). The taste-imparting components can be in a not completely dry state (i.e. partially wet), or be completely wet, but also frozen or dry taste-imparting ingredients may be used herein.

The packaged concentrate according to the present invention may further comprising 0.5 to 30% (weight on total concentrate) of a taste enhancer selected from the group of monosodium glutamate, 5'-ribotides, organic acids, or mixtures thereof. It is also preferred that the packaged concentrate according to the present invention further comprises 1-30%, preferably 1-15% (weight% based on total packaged concentrate) of emulsified or dispersed oil and/or fat. Salt can also be seen as a taste enhancer, but is herein regarded as a separate category of ingredients.

For the packaged concentrate according to the present invention, it is preferred that the total water content of the concentrate is 20-60% by weight (based on the total packed concentrate), preferably 40-60% by weight (based on the total packed concentrate). Also, it is preferred that the packaged concentrate according to the invention has a water activity $a_W$ of 0.4 to 0.87, preferably 0.5-0.82, more preferably 0.7-0.78, most preferably 0.7-0.75. Preferably, the pH of the concentrate is between 5 and 9, preferably 5-7.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature.

The packaged concentrates according to the present invention are preferably translucent or transparent. This can also make it attractive to choose e.g. packaging which is at least partially transparent.

The invention further relates to a process for the preparation of a packaged concentrate for preparing a bouillon, broth, soup, sauce, gravy or for use as a seasoning. More particularly, the present invention provides a process for preparing such a packaged concentrate comprising:

- 20-80% water (weight % based on total packaged concentrate),
- 0.8% to 2.5% (weight % based on water content of concentrate) of a gelling agent comprising the combination of xanthan and tara gum, xanthan and tara gum each being present in an amount of 20-80% on the total amount of xanthan + tara gum,
- 3-40% (weight % based on water content of concentrate), more preferably 3-30%, even more preferably 15-30%, most preferably 15-26% of salt,
- 0.5-60% (weight % based on the total packaged concentrate) of taste imparting components,

the process comprising the steps of mixing all ingredients, filling the mixture into a packaging and closing the packaging, wherein a heating step is applied prior to and/or during and/or after the filling into the packaging.

The present process advantageously yields a packaged concentrate as defined herein before, especially a packaged concentrate that has the appearance and/or the rheology of a gel.

The present process may suitably comprise the steps of mixing the ingredients with the water, filling into the packaging (e.g. blister packs or cups or tubs) and closing the packs (e.g. by a seal), wherein a heating step is applied prior to, during or after the filling into the packaging, for preservation purposes and/or to facilitate dissolution of ingredients and/or achieving gelation (upon cooling thereafter) of thermoset gels and/or to achieve that e.g. xanthan is in its appropriate conformation. In the present process, the mixture of ingredients may be filled in the packaging in non-gelled or gelled form .According to one embodiment, the (heated) mixture may be poured in moulds, cooled to set. After setting to a gel, the gelled concentrate will have to be removed from the moulds and packaged. It is preferred, however, to manufacture directly into the packaging. It is preferred to mix the ingredients with the water, fill into the packaging and close the packaging, wherein a heating step is applied prior to, and/or during and/or after the filling into the packaging.

In the above process, it is preferred that at least part of the heating stage is to a temperature of at least 50°C, more preferably of at least 70°C, but can be at least 80°C, the temperature required can be determined from the literature by the person of average skill in the art and/or by routine experimentation. Also, it is preferred that the temperature of the mixture during the filling is at least 70°C. When fat is used solid at room temperature, it is preferably melted first before adding to other components.

By manufacturing the packaged concentrates according to the present invention, e.g. by the process as set out above, it was found that concentrates for preparing a bouillon, broth, soup, sauce, gravy or for use as a seasoning could be obtained that are in gel form, are quickly dispersible/dissolvable (e.g. 37 g in less than 4 minutes, preferably less than 3 minutes, when immersed in 1000 ml boiling water), show a low tendency to syneresis, and can be made in such a way that they can be used in the dillution rates usual for bouillon concentrates (e.g. 1:20-1:50).

Typical shapes in which the product according to the invention may be made comprise shapes such as is in the form of a cube, tablet, pellet, ball, briquette, dragee, cone, truncated cone, or in the shape of (the profile or projection or portrait of) an animal or part thereof (e.g. animal head). Due to the formulation and the subsequent manner of manufacturing, complex shapes are possible.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1 g -10 kg, preferably 2-250 g, more preferably 10-50 g. The portion of the concentrate according to the present invention as packaged is preferably such that the concentrate has a weight excluding packaging) of 1 g -10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

The packaged concentrates described herein are preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners. As used herein, "sweetness index" is a term used to describe the level of sweetness of the dosage form relative to sucrose. Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995". It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

Preferably, the packaged concentrate according to the invention (when taken out of the packaging) has the appearance or rheology of a gel. Preferably, the gel appearance and/or gel rheology is evidenced by a ratio of elastic modulus G' : viscous modulus G" of at least 1. The method of measuring these parameters is described below. In scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the present concentrate, a ratio of greater than 1 is suitable. It is preferred, however, that said ratio is greater than 2, even more preferably greater than 3.

The absolute value of the viscous modus G" is preferably greater than 10 Pa, more preferably greater than 15 Pa, even more preferably greater than 20 Pa, and most preferably greater than 50 Pa. This criterion distinguishes between thin solutions with gel character and a more shape retaining jelly products that are the intended products according to this invention.

The above given values should be measured under the following circumstances:

- a maturation time of at least 12 h under ambient conditions,
- measurement temperature of 25°C,
- an oscillatory frequency of 1 rad/s and
- a strain of 1%.

This set of parameters refers to a standard oscillatory test conducted with a standard state of the art low deformation rheometer as commercially available from e.g. Bohlin or TA Instruments.

According to yet another preferred embodiment, the packaged concentrate of the present invention has a gel strength of at least 10 g, even more preferably of at least 15 g and most preferably of at least 20 g.

The requirements as stated herein for G' : G", G" and gel strength should preferably apply to the whole concentrate, and not just for a part of it. Also, it is preferred that the concentrate does not consist of a solid envelope material covering a (liquid) core. It can also be preferred that the concentrate is translucent and/or transparent.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity $a_w$ and pH of the composition may ensure such.

The invention further relates to the use of the concentrate according to the present invention and as set out above for preparing a bouillon, broth, soup, sauce, gravy or for use as a seasoning. This may be done by diluting with an aqueous liquid (e.g. water) under application of heat, in e.g. a ratio of 1:15 - 1: 100, preferably 1:20 - 1:70, more preferably 1:20 - 1:50. The present use e.g. implies removing the concentrate from its packaging, and adding it to food or a dish, either during or after its preparation, optionally further applying heat and/or stirring the food or dish with such concentrate.

**Examples**

Example 1a.

A dry mix was prepared comprising:

Pork fat, 690 g
Salt, 709 g
Pork protein 295 g
Sugar, 200 g
MSG, 120 g
Pork flavour (dissolvable powder), 60 g

The above mixture was made in a gel with 2170 g water, 13.0 g xanthan and 13.0 g tara gum. This gel (at 25% salt on water) had a gel strength of approx. 35 g (measured with the method below) and dissolved in about 95 seconds (37g gel immersed in 1000g boiling water).

Processing:

Process Description:

1. Mix all dry ingredients in a Hobart Mixer until homogeneous
2. Melt fat at 60°C
3. Add water into a double jacket vessel (Unimix type) and close the vessel.
4. Add mix into the vessel.
5. Add molten fat into the vessel.
6. Heat up to 90°C while stirring
7. Keep at 90°C for 3min while stirring
8. Hot filling into containers, followed by sealing and leaving to cool to room temperature

Example 1b.

The same dry mix as under 1a was now gelled with 2170 g water, 17.3 g xanthan and 17.3 g tara gum. This gel (at 25 % salt on water) had a gel strength of approx. 50 g (measured with the method below) and dissolved in about 120 seconds (37 g gel immersed in 1000 g boiling water).
Both examples 1a-1b had low syneresis.
The gel strength was measured using the following method:

- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers used were glass jars (diameter 7 cm; height 4 cm).
- After preparation, samples have been stored at ambient conditions (21 °C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

Results examples (G' and G" at 21 °C, ambient, as measured following the instructions in the description):

| Example | Storage modulus G' (Pa) | Loss modulus G" (Pa) | Ratio G'/G" | $a_w$ | Dillution rate | Dissoln. time (s) | syneresis | Gel strength plunger (g) |
|---|---|---|---|---|---|---|---|---|
| 1a | 56.3 | 16.5 | 3.41 | 0.74 | 1:27 | < 120 s. | Low | 35 |
| 1b | 130 | 42.1 | 3.08 | 0.74 | 1:27 | 120 - 140 s. | Low | 50 |

**Claims**

1. Packaged concentrate for preparing a bouillon, broth, soup, sauce, gravy or for use as a seasoning, said concentrate comprising:

   - 20-80% water (weight % based on total packaged concentrate),
   - 0.8% to 2.5% (weight % based on water content of concentrate) of a gelling agent comprising the combination of xanthan and tara gum, xanthan and said tara gum each being present in an amount of 20-80% on the total amount of xanthan + tara gum,
   - 15-40% (weight % based on water content of concentrate), preferably 15-30% of salt,
   - 0.5-60% (weight % based on the total packaged concentrate) of taste imparting components,

   wherein the concentrate has the appearance or rheology of a gel as expressed by a ratio of elastic modulus G' : viscous modulus G" of at least 1, preferably at least 3, and wherein the concentrate has a viscous modulus G" of at least 10 Pa.

2. Packaged concentrate according to claim 1, wherein the amount of the gelling agent comprising the combination of xanthan and tara gum is 1-2%, preferably 1.2% -1.8% (weight % based on water content of concentrate).

3. Packaged concentrate according to any of claims 1-2, wherein xanthan and tara gum each are present in an amount of 30-70% on the total amount of xanthan + tara gum, preferably in an amount of 40-60%, more preferably in an amount of 45-55%.

4. Packaged concentrate according to any of claims 1-3, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin and/or herbs, vegetables, fruits, meat, fish, crustaceans, or particulates thereof.

5. Packaged concentrate according to any of claims 1-4, wherein the total water content of the concentrate is 40-60% by weight (based on the total packaged concentrate).

6. Packaged concentrate according to any of claims 1-5, wherein the concentrate has a water activity $a_w$ of 0.5 to 0.87, preferably 0.7-0.78.

7. Packaged concentrate according to any of claims 1-6, wherein the concentrate further comprises 1-30%, preferably 1-15% (weight % based on total packaged concentrate) of emulsified oil and/or fat.

8. Packaged concentrate according to any of claims 1-7, wherein the concentrate is packaged in a sealed cup or a sealed tub.

9. Process for preparing a packaged concentrate for preparing a bouillon, broth, soup, sauce, gravy or for use as a seasoning, said concentrate comprising:

   - 20-80% water (weight % based on total packaged concentrate),
   - 0.8% to 2.5% (weight % based on water content of concentrate) of a gelling agent comprising the combination of xanthan and tara gum, xanthan and tara gum each being present in an amount of 20-80% on the total amount of xanthan + tara gum,
   - 3-40% (weight % based on water content of concentrate), more preferably 15-30%, most preferably 15-26% of salt,
- 0.5-60% (weight % based on the total packaged concentrate) of taste imparting components,
the process comprising the steps of mixing all ingredients, filling the mixture into a packaging and closing the packaging, wherein a heating step is applied prior to and/or during and/or after the filling into the packaging.

10. Process according to claim 9, wherein the concentrate has the rheology of a gel.

11. Process according to any of claims 9-10, wherein at least part of the heating step is to a temperature of at least of at least 50°C, preferably of at least 70°C.

12. Use of a packaged concentrate according to any of claims 1-8, for preparing a bouillon, broth, soup, sauce, gravy or for use as a seasoning.

**Patentansprüche**

1. Abgepacktes Konzentrat zur Herstellung einer Bouillon, einer Brühe, einer Suppe, einer Soße, eines Bratensafts oder zur Verwendung als Würze, wobei das Konzentrat umfasst:

   - 20-80 % Wasser (Gewichts-%, bezogen auf das ganze abgepackte Konzentrat),
   - 0,8 % bis 2,5 % (Gewichts-%, bezogen auf den Wassergehalt des Konzentrats) eines Geliermittels, das die Kombination aus Xanthan und Taragummi umfasst, wobei Xanthan und Taragummi jeweils in einer Menge von 20-80 %, bezogen auf die Gesamtmenge von Xanthan + Taragummi, vorliegen,
   - 15-40 % (Gewichts-%, bezogen auf den Wassergehalt des Konzentrats), vorzugsweise 15-30 %, Salz,
   - 0,5-60 % (Gewichts-%, bezogen auf das ganze abgepackte Konzentrat) Geschmack verleihender Komponenten,

   wobei das Konzentrat das Aussehen oder die Rheologie eines Gels hat, wie es/sie durch ein Verhältnis von Elastizitätsmodul G': viskoser Modul G" von wenigstens 1, vorzugsweise wenigstens 3, ausgedrückt wird und wobei das Konzentrat einen viskosen Modul G" von wenigstens 10 Pa hat.

2. Abgepacktes Konzentrat gemäß Anspruch 1, wobei die Menge des Geliermittels, das die Kombination aus Xanthan und Taragummi umfasst, 1-2 %, vorzugsweise 1,2-1,8 % (Gewichts-%, bezogen auf den Wassergehalt des Konzentrats) ist.

3. Abgepacktes Konzentrat gemäß einem der Ansprüche 1-2, wobei Xanthan und Taragummi jeweils in einer Menge von 30-70 %, bezogen auf die gesamte Menge an Xanthan + Taragummi, vorzugsweise in einer Menge von 40-60 %, bevorzugter in einer Menge von 45-55 %, vorliegen.

4. Abgepacktes Konzentrat gemäß einem der Ansprüche 1-3, wobei die Geschmack verleihenden Komponenten eines oder mehrere von flüssigen oder lösbaren Extrakten oder Konzentraten von einem oder mehreren von Fleisch, Fisch, Kräutern, Früchten oder Gemüsen und/oder Aromastoffen und/oder Hefeextrakt und/oder hydrolysiertem Protein mit Herkunft von Gemüse, Soja, Fisch oder Fleisch und/oder Kräutern, Gemüsen, Früchten, Fleisch, Fisch, Krustentieren oder partikulärem Material davon umfassen.

5. Abgepacktes Konzentrat gemäß einem der Ansprüche 1-4, wobei der gesamte Wassergehalt des Konzentrats 40-60 Gewichts-% (bezogen auf das ganze abgepackte Konzentrat) ist.

6. Abgepacktes Konzentrat gemäß einem der Ansprüche 1-5, wobei das Konzentrat eine Wasseraktivität $a_w$ von 0,5 bis 0,87, vorzugsweise von 0,7-0,78, hat.

7. Abgepacktes Konzentrat gemäß einem der Ansprüche 1-6, wobei das Konzentrat außerdem 1-30 %, vorzugsweise 1-15 % (Gewichts-%, bezogen auf das ganze abgepackte Konzentrat) emulgiertes Öl und/oder Fett umfasst.

8. Abgepacktes Konzentrat gemäß einem der Ansprüche 1-7, wobei das Konzentrat in einem versiegelten Becher oder einem versiegelten Bottich verpackt ist.

9. Verfahren für die Herstellung eines abgepackten Konzentrats zur Herstellung einer Bouillon, einer Brühe, einer Suppe, einer Soße, eines Bratensafts oder zur Verwendung als Würze, wobei das Konzentrat umfasst:

- 20-80 % Wasser (Gewichts-%, bezogen auf das ganze abgepackte Konzentrat),
- 0,8 bis 2,5 % (Gewichts-%, bezogen auf den Wassergehalt des Konzentrats) eines Gellermittels, das die Kombination aus Xanthan und Taragummi umfasst, wobei Xanthan und Taragummi jeweils in einer Menge von 20-80 %, bezogen auf die Gesamtmenge von Xanthan + Taragummi, vorliegen,
- 3-40 % (Gewichts-%, bezogen auf den Wassergehalt des Konzentrats), vorzugsweise 15-30 %, am bevorzugtesten 15-26 %, Salz,
- 0,5-60 % (Gewichts-%, bezogen auf das ganze abgepackte Konzentrat) Geschmack verleihender Komponenten,

wobei das Verfahren die Schritte des Mischens aller Inhaltsstoffe, Füllens des Gemisches in eine Verpackung und Verschließens der Verpackung umfasst, wobei ein Schritt des Erwärmens vor und/oder während und/oder nach dem Füllen in die Verpackung angewendet wird.

10. Verfahren gemäß Anspruch 9, wobei das Konzentrat die Rheologie eines Gels hat.

11. Verfahren gemäß einem der Ansprüche 9-10, wobei wenigstens ein Teil des Erwärmungsschritts auf eine Temperatur von wenigstens 50 °C, vorzugsweise wenigstens 70 °C, ist.

12. Verwendung eines abgepackten Konzentrats gemäß einem der Ansprüche 1-8 zur Herstellung einer Bouillon, einer Brühe, einer Suppe, einer Soße, eines Bratensafts oder zur Verwendung als Würze.

**Revendications**

1. Concentré conditionné pour la préparation d'un consommé, d'un bouillon, d'une soupe, d'une sauce ou d'un jus ou à utiliser comme assaisonnement, ledit concentré comprenant :

   ➢ de 20 % à 80 % d'eau (% en poids par rapport au
   poids total du concentré conditionné),
   ➢ de 0,8 % à 2,5 % (% en poids par rapport à la teneur en eau du concentré) d'un agent gélifiant comprenant la combinaison de xanthane et de gomme de tara, le xanthane et ladite gomme de tara étant chacun présents en une quantité allant de 20 % à 80 % par rapport à la quantité totale de xanthane + gomme de tara,
   ➢ de 15 % à 40 % (% en poids par rapport à la
   teneur en eau du concentré), de préférence de 15 % à 30 % de sel,
   ➢ de 0,5 % à 60 % (% en poids par rapport au
   poids total du concentré conditionné) de composants aromatiques,

   dans lequel le concentré à l'aspect ou la rhéologie d'un gel tel qu'exprimé par un rapport module d'élasticité G' : module de viscosité G" supérieur ou égal à 1, de préférence supérieur ou égal à 3, et dans lequel le concentré présente un module de viscosité G" supérieur ou égal à 10 Pa.

2. Concentré conditionné selon la revendication 1, dans lequel la quantité d'agent gélifiant comprenant la combinaison de xanthane et de gomme de tara va de 1 % à 2 %, de préférence de 1,2 % à 1,8 % (% en poids par rapport à la teneur en eau du concentré).

3. Concentré conditionné selon l'une quelconque des revendications 1 à 2, dans lequel le xanthane et la gomme de tara sont chacun présents en une quantité allant de 30 % à 70 % de la quantité totale de l'ensemble xanthane + gomme de tara, de préférence en une quantité allant de 40 % à 60 %, de manière davantage préférée en une quantité allant de 45 % à 55 %.

4. Concentré conditionné selon l'une quelconque des revendications 1 à 3, dans lequel les composants aromatiques comprennent un ou plusieurs extraits ou concentrés liquides ou solubles de viande, de poisson, d'herbes aromatiques, de fruits ou de légumes, et/ou des arômes, et/ou des extraits de levure, et/ou des protéines hydrolysées provenant de légumes, de soja, de poissons ou de viandes, et/ou des herbes aromatiques, des légumes, des fruits, de la viande, du poisson, des crustacés ou des particules de ces derniers.

**5.** Concentré conditionné selon l'une quelconque des revendications 1 à 4, dans lequel la teneur totale en eau du concentré va de 40 % à 60 % en poids (par rapport au poids total du concentré conditionné).

**6.** Concentré conditionné selon l'une quelconque des revendications 1 à 5, dans lequel le concentré a une activité de l'eau $a_w$ allant de 0,5 à 0,87, de préférence de 0,7 à 0,78.

**7.** Concentré conditionné selon l'une quelconque des revendications 1 à 6, dans lequel le concentré comprend en outre de 1 % à 30 %, de préférence de 1 % à 15 % (% en poids par rapport au poids total du concentré conditionné) d'huile et/ou de matières.grasses émulsifiées.

**8.** Concentré conditionné selon l'une quelconque des revendications 1 à 7, dans lequel le concentré est conditionné dans une coupelle ou un bac fermé hermétiquement.

**9.** Procédé pour la préparation d'un concentré conditionné pour la préparation d'un consommé, d'un bouillon, d'une soupe, d'une sauce ou d'un jus ou à utiliser comme assaisonnement, ledit concentré comprenant :

➢ de 20 % à 80 % d'eau (% en poids par rapport au poids total du concentré conditionné),
➢ de 0,8 % à 2,5 % (% en poids par rapport à la teneur en eau du concentré) d'un agent gélifiant comprenant la combinaison de xanthane et de gomme de tara, le xanthane et la gomme de tara étant chacun présents en une quantité allant de 20 % à 80 % par rapport à la quantité totale de xanthane + gomme de tara,
➢ de 3 % à 40 % (% en poids par rapport à la teneur en eau du concentré), de préférence de 15 % à 30 %, de manière davantage préférée de 15 % à 26 % de sel,
➢ de 0,5 % à 60 % (% en poids par rapport au poids total du concentré conditionné) de composants aromatiques, le procédé comprenant les étapes consistant à mélanger tous les ingrédients, à transférer le mélange dans un conditionnement et à fermer le conditionnement, dans lequel une étape consistant à chauffer le mélange est réalisée avant et/ou pendant et/ou après le transfert dans le conditionnement.

**10.** Procédé selon la revendication 9, dans lequel le concentré a la rhéologie d'un gel.

**11.** Procédé selon l'une quelconque des revendications 9 à 10, dans lequel au moins une partie de l'étape consistant à chauffer le mélange est réalisée à une température supérieure ou égale à 50°C, de préférence supérieure ou égale à 70°C.

**12.** Utilisation d'un concentré conditionné selon l'une quelconque des revendications 1 à 8, pour la préparation d'un consommé, d'un bouillon, d'une soupe, d'une sauce ou d'un jus, ou pour une utilisation comme assaisonnement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61031068 A

**Non-patent literature cited in the description**

- Römpp Lebensmittelchemie. Georg Thieme Verlag, 1995
- **Thomas Mezger.** Das Rheologie Handbuch. Curt R. Vincentz-Verlag, 2000